# EUROPEAN PATENT SPECIFICATION

(11) **EP 1 291 499 B1**
(45) Date of publication and mention of the grant of the patent: **29.12.2004**
(21) Application number: 02256304.3
(22) Date of filing: 11.09.2002
(51) Int. Cl.: F01N 5/02, F01N 3/04, F02D 9/08, F28F 9/00

(54) **A heat exchanger and a method of mounting the heat exchanger**
Wärmetauscher und Verfahren zur Lagerung des Wärmetausches
Echangeur de chaleur et méthode de fixation de l'échangeur de chaleur

(30) Priority: 11.09.2001 GB 0121981
(43) Date of publication of application: 12.03.2003
(73) Proprietor: Arvin International (UK) Limited, Blackpool, Lancashire FY4 3RN (GB)
(72) Inventor: Irigaray, Victor, 31350 Peralta (ES); Sever-Topping, Nicolas, St.Annes, Lancashire FY8 3SQ (GB); Hartick, Johannes Wilhelm, St.Annes, FY8 2NS (GB)
(74) Representative: Jones, John Bryn

(56) References cited:
- EP-A- 0 885 758
- GB-A- 2 301 177
- US-A- 4 914 929
- US-A- 5 632 328
- US-A- 6 141 961

## Description

The present invention relates to a heat exchanger in an exhaust assembly, an exhaust assembly and a method of mounting a heat exchanger in an exhaust assembly.

It is known to mount a heat exchanger in the exhaust path of internal combustion engines. The purpose of mounting the heat exchanger in the exhaust path is either to control the exhaust temperature to improve the efficiency of any exhaust gas after treatment devices and/or to recover heat from the exhaust gas to provide heating. Both gas and liquid cooled heat exchangers are known. Conventionally heat exchangers are mounted in exhaust assemblies by welding or by clamping into the exhaust duct line. Due to the differential temperatures between the exhaust duct line and the heat exchanger, differential expansion of the components can occur and must be compensated for. It is known to compensate for differential expansion by the use of flexible pipes which are expensive. In addition, the flexible pipes have to be welded or brazed into the exhaust assembly.

Such an arrangement is shown in US6141961 which includes an expansion compensation element in the main pipe to allow for expansion and contraction generated by the differential temperatures observed. GB 1568303 illustrates a catalyser body surrounded by a fibrous refractory material in a compressive manner.

It is an object of the invention to provide an improved heat exchanger.

According to the invention there is provided a heat exchanger in an exhaust assembly comprising a heat exchanger body and coolant inlet and outlet ducts characterised in that a compressible mounting means is arranged around the body and an outer shell is arranged around the mounting means such that the compressible mounting means is compressed, in that the outer shell has one or more apertures to allow passage of the coolant ducts and in that sealing means is provided to seal the or each aperture around the ducts against the escape of the exhaust gas.

The compressible mounting provides a firm mounting for the heat exchanger within the assembly but which allows for differential expansion of the heat exchanger components and the exhaust components without the need for flexible pipes in the assembly thus saving the cost of the pipe as well as manufacturing costs incurred in welding the pipe into place. In addition, the use of mounting means which surrounds the heat exchanger provides additional insulation preventing heat loss from the heat exchanger.

Preferably, the compressible mounting means comprises a fibrous material. Most preferably, the fibrous material is such that when compressed it is substantially gas tight so as to prevent gas leaking between the outer shell and the heat exchanger body.

That ensures a further reduction in heat loss to ambient by preventing hot gases losing their heat through the wall of the exhaust and instead ensures that hot gases travel through the heat exchanger.

Most preferably, the compressible mounting means comprises a mat which may be wrapped around the heat exchanger body. In such a case, the mat may be made from the aforesaid fibrous material.

Preferably, the fibrous material comprises a ceramic fibre, a glass fibre or a mineral fibre.

The heat exchanger is preferably of the liquid cooled type.

The outer shell preferably comprises two parts, the two parts being brought together and compressed so as to compress the mounting means. The two parts of the outer shell are preferably secured together by welding.

In a preferred embodiment, the heat exchanger comprises a valve which is arranged to vary the flow of exhaust gas through the heat exchanger body. The valve is preferably received within the outer shell. The valve is preferably mounted in the outer shell by a compressible mounting means. The valve compressible mounting means may comprise a mat of the type described above. Alternatively, the valve compressible mounting means may comprise a compressible annular collar, most preferably two compressible annular collars arranged one each end of the valve. In a further embodiment the compressible mounting means of the valve comprises both the aforesaid mat and the aforesaid annular collar members, the mat being arranged between the annular collar members.

According to another aspect of the invention there is provided a method of mounting a heat exchanger in an exhaust assembly, the heat exchanger comprising a heat exchanger body, coolant inlet and outlet ducts a compressible mounting means and an outer shell having at least one aperture to allow passage of the coolant ducts, the method being characterised by the steps of arranging the compressible mounting means (36) around the heat exchanger body, arranging the body in the mounting means in the outer shell, arranging the ducts through the or each aperture, compressing the mounting means by means of the outer shell and sealing the or each aperture around the ducts.

In a preferred embodiment, the method comprises the steps of providing an outer shell in two parts, arranging the compressible mounting means around the heat exchanger body, arranging the body and the mounting means in one part of the outer shell, closing off the outer shell by arranging the other part of the outer shell together with said one part, compressing the parts of the outer shell together to compress the compressible mounting means and securing the parts of the outer shell together. Most preferably, the step of securing the parts of the outer shell together comprises the step of securing the parts of the outer shell together by welding.

The term "compressible" is intended to indicate that the mounting means occupies a volume prior to assembly of the outer shell greater than the volume occupied after assembly of the outer shell. In particular, the compressible mounting means is thicker prior to compressive assembly than after such assembly.

A heat exchanger in accordance with the invention will now be described in detail by way of example and with reference to the accompanying drawings, in which:
FIG. 1 is a perspective view of a heat exchanger,
FIG.2 is a plan view of a heat exchanger in accordance with the invention,
FIG.3 is a cross-section taken on line A-A in FIG.1,
FIG.4 is a plan view of a further heat exchanger in accordance with the invention,
FIGS.5a to 5c are schematic plan views of the valve of FIG.4,
FIG.6 is a schematic longitudinal cross-section through part of another heat exchanger in accordance with the invention, and
FIG.7 is a schematic longitudinal cross-section through part of a further heat exchanger in accordance with the invention.

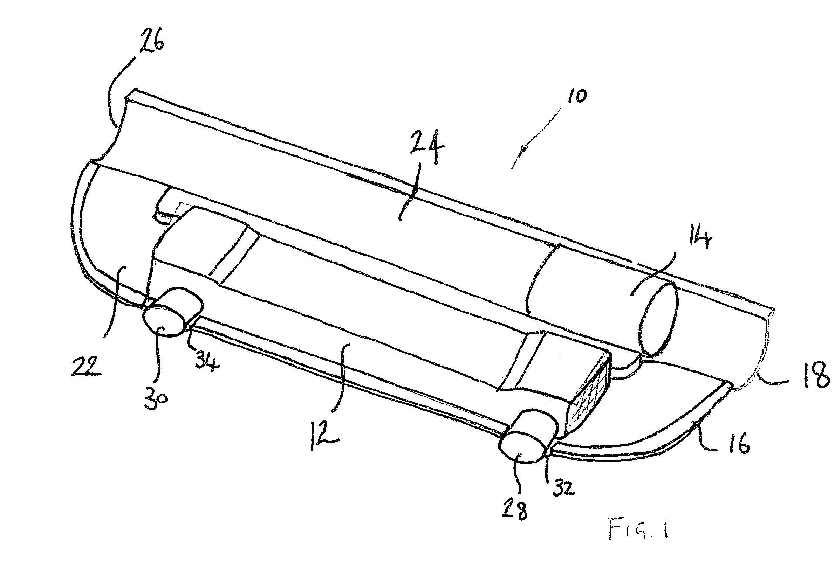

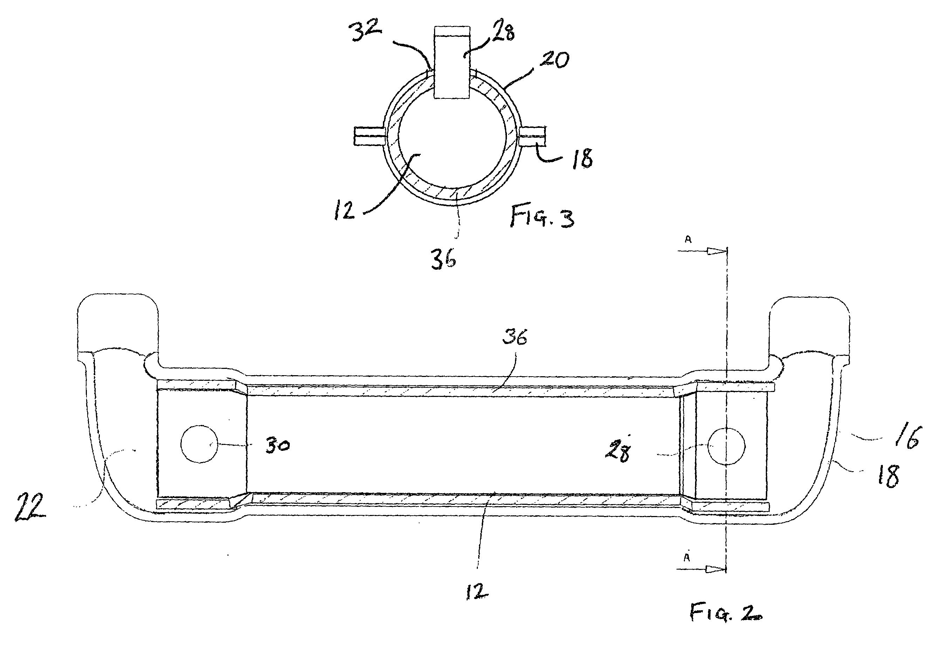

In FIG.1 a heat exchanger assembly 10 is shown in perspective with the upper part of the shell thereof removed for clarity. The heat exchanger 10 comprises a heat exchanger body 12, a valve 14 and an outer shell 16. The outer shell 16 comprises a bottom part 18. The top part 20 is shown in FIG.3.

When the two parts 18, 20 of the shell 16 are located together, two separate gas conduits are provided. The first is labelled 22 in FIG. 1 while the second is labelled 24 in FIG.1. The heat exchanger body 12 is located in the gas conduit 22 while the valve 14 is located in the gas conduit 24.

In operation, exhaust gas flows into the outer shell 16 via an opening 26 which is in fluid communication with the exhaust manifold of an internal combustion engine. With the valve 14 fully open, exhaust gases flow directly through the conduit 24 and out of the other side of the outer shell 16. As the valve 14 is closed, resistance to gas flow via conduit 24 increases relative to that in that gas flow conduit 22 and exhaust gases pass down gas conduit 22 through the passages in the heat exchanger body 12 and out of the outer shell 16 of the other side of the heat exchanger 12.

The heat exchanger 12 comprises a plurality of elongate tubes (not shown) which are arranged longitudinally of the heat exchanger body 12 surrounded by a jacket through which liquid coolant flows. The tubes carry the hot exhaust gases. Liquid coolant is supplied to the heat exchanger body 12 via inlet conduit 28 and leaves the heat exchanger via outlet conduit 30. Respective apertures 32, 34 are defined in the outer shell 16 in order to allow passage of the inlet/outlet conduits 28, 30.

Hot gas flowing through the heat exchanger body 12 heats the liquid for use elsewhere in the vehicle. In addition, passing the exhaust gases through the heat exchanger removes heat energy from the exhaust gases, thereby cooling them, most preferably to a temperature suitable for the after treatment of exhaust gases, (for example in a catalytic convertor).

FIG.2 illustrates part of a heat exchanger assembly 10, similar to that shown in FIG.1 (although not identical). In FIG.2, only the gas conduit 22 part of the lower part 18 of the outer shell 16 is shown. In the embodiment shown in FIG.2 the inlet and outlet conduits 28, 30 of the heat exchanger body 12 extend upwardly of the body as opposed to from one side.

The heat exchanger body 12 is wrapped in a ceramic fibre mat 36. The mat 36 substantially surrounds the body of the heat exchanger 12 as can be seen in FIG.3.

The ceramic fibre mat 36 is compressible. The mat 36 is thicker before assembly than after assembly.

Once the mat 36 is wrapped around the heat exchanger body 12 and secured in place, the heat exchanger body 12 is inserted into the lower half 18 of the shell 16. The upper half 20 of the shell 16 is then arranged over the heat exchanger in such a way that the inlet and outlet conduits 28, 30 protrude through the corresponding apertures 32, 34 in the upper part of the shell 16. At that stage the fibrous mat 36 is such that the edges of the upper and lower parts 20, 18 of the shell 16 are not touching. The upper and lower parts 20, 18 are then compressed together so as to compress the fibre mat 36. The edges of the upper and lower parts 20, 18 of the outer shell 16 are then welded together to secure the shell in such a way that the fibrous mat 36 is compressed.

By compressing the fibrous mat, a secure mounting for the heat exchanger is provided which allows for differential expansion of the heat exchanger and the outer shell, which insulates the heat exchanger from heat loss to the environment and which is substantially gas tight so as to prevent gas leaking between the outer shell and heat exchanger body. Compression of the fibrous mat 36 also has the effect of sealing off the aperture 32, 34. Any clearance between the inner walls of apertures 32, 34 and the respective outer walls of conduits 28, 30 is filled by the compressed fibre mat which is substantially gas tight.

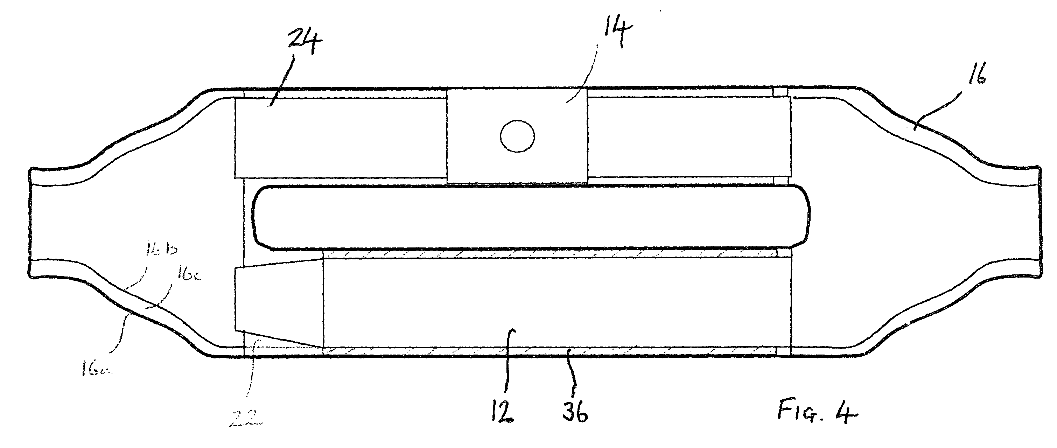

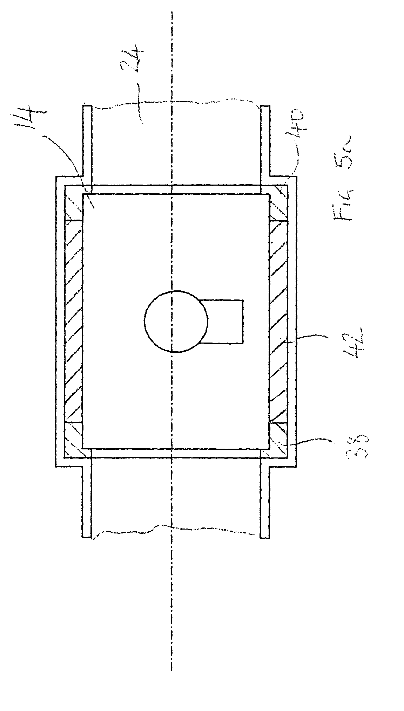

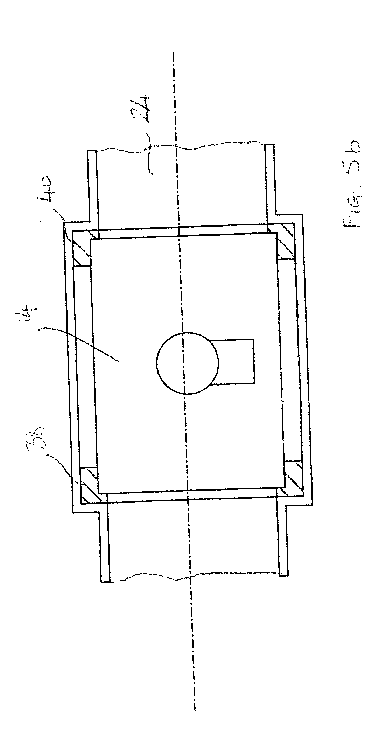

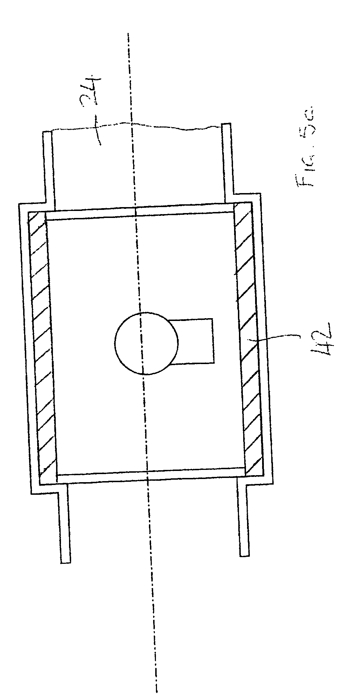

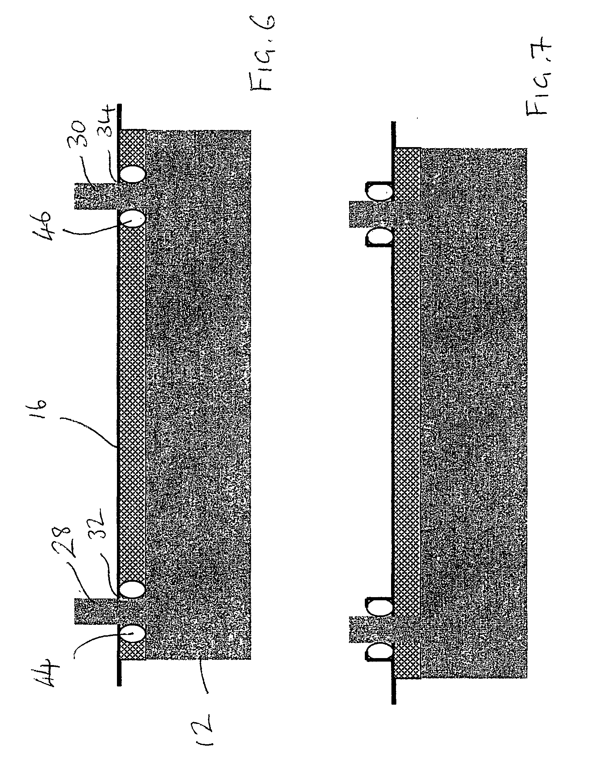

FIG. 4 illustrates another embodiment of heat exchanger assembly in accordance with the invention which is substantially identical to that of FIGS.1-3. In FIG.4 the shell 16 has a double walled construction comprising a thick outer wall 16a and a thin inner wall 16b defining an air gap 16c therebetween. The air gap 16c provides insulation for the shell 16 where the fibre mat 36 is not provided.

In the embodiment shown in FIG.4, the valve 14 is located at the mid-point of gas conduit 24. The valve 14 can be mounted in a number of ways. Preferably, in the embodiment shown, the valve 14 is mounted as shown in FIG.5a. In FIG.5a the valve 14 is received in the lower part 18 of the outer shell 16 in the gas conduit 24. The valve 14 is preferably substantially cylindrical and has L-shaped sealing rings 38, 40 arranged one at each end thereof. A fibrous mat 42 similar to the fibrous mat 36 which mounts the heat exchanger body 12 is wrapped around the valve 14 between the L-shaped sealing rings 38, 40. The L-shaped sealing rings 38, 40 comprise a fibre filled wire mesh and they are compressible so as to form a gas tight seal at each end of the valve. As before, the fibrous mat 42 is compressible to form a gas tight seal and the valve 5a is assembled into the heat exchanger assembly in a substantially similar manner to the heat exchanger 12. In other words, the fibrous mat 42 and sealing rings 38, 40 are arranged on the valve 14. The valve 14 is located in the lower part 18 of the outer shell 16 and the upper part 20 of the outer shell 16 is then arranged on top of the lower part 18. The parts 18, 20 are then compressed together so as to compress the sealing rings 38, 40 and the fibrous mat 40 so as to form a gas tight seal around the valve 14. The parts 18, 20 of the outer shell 16 are then secured together by welding.

As an alternative, as shown in FIG.5b, the valve can simply be mounted by means of the L-shaped sealing rings 38, 40.

In a still further embodiment the valve 14 can simply be located by means of the fibrous mat 42.

Although the heat exchanger 12 is stated to be a liquid cooled heat exchanger, it could also be a gas cooled heat exchanger. The fibrous mat 36 may be made of ceramic fibre, as stated, or glass or mineral fibres or a mixture of the above.

The heat exchanger mounted in the manner described provides a relatively inexpensive yet secure mounting which allows for differential expansion, insulates the heat exchanger against heat loss to the environment and which provides a gas tight mounting for both the heat exchanger body 12 and the valve 14.

In some circumstances, the compression of the mat alone does not provide a sufficiently gas tight seal for the inlet and outlet conduits 28, 30 of the heat exchanger. In such cases, in order to prevent exhaust gases from escaping via the clearance between the exhaust shell and the heat exchanger conduits 28, 30, further sealing is provided.

Two such sealing arrangements are shown in Figs.6 and 7. In Figs.6 and 7, the heat exchanger is substantially similar to that shown in Figs.1 to 3 and parts corresponding to parts in Figs.1 to 3 carry the same reference numerals.

In Fig.6, a heat exchanger body 12 is received in an outer shell 16. The body 12 is wrapped in and mounted by ceramic fibre mat 36. Inlet and outlet conduits 28, 30 extend through respective apertures 32, 34 in the shell 16.

Two compressible annular seals 44, 46 are provided, one arranged around the inlet conduit 28 and the other around the outlet conduit 30. The seals 44, 46 are compressed between the inner wall of the shell 16 and the outer surface of the heat exchanger body 12 so as to provide a gas tight seal.

In Fig.7, the shell 16 has two collar portions 48, 50 which extend along part of the conduits 28, 30 as the conduits exit the shell 16. The seals 44, 46 are provided between the inner walls of the collars 48, 50 and the outer walls of the conduits 28, 30 so as to provide the gas tight seal.

## Claims

1. A heat exchanger (10) in an exhaust assembly comprising a heat exchanger body (12) and coolant inlet and outlet ducts (28, 30) **characterised in that** a compressible mounting means is arranged around the body and an outer shell (16) is arranged around the mounting means such that the compressible mounting means is compressed, **in that** the outer shell has one or more apertures (32, 34) to allow passage of the coolant ducts and **in that** sealing means is provided to seal the or each aperture around the ducts against the escape of the exhaust gas.

2. A heat exchanger according to claim 1 in which the sealing means comprises the compressible mounting means whereby the compressible mounting means seals the or each aperture around the ducts against the escape of exhaust gases.

3. A heat exchanger according to claim 2 in which the sealing of the or each aperture is effected by compressing the compressible mounting means with the outer shell.

4. A heat exchanger according to claim 1 in which the sealing means comprises a seal member (44, 46).

5. A heat exchanger according to claim 1, 2 or 3 in which the sealing of the or each aperture is effected by compressing the seal member with the outer shell.

6. A heat exchanger (10) according to claim 1 in which the compressible mounting means (36) comprises a fibrous material.

7. A heat exchanger (10) according to claim 2 in which the fibrous material is such that when compressed it is substantially gas tight so as to prevent gas leaking between the outer shell (16) and the heat exchanger body (12).

8. A heat exchanger (10) according to any of claims 1 to 7 in which the compressible mounting means (36) comprises a mat wrapped around the heat exchanger body (12).

9. A heat exchanger (10) according to any preceding claim in which the outer shell (16) comprises two parts (18, 20), the two parts being brought together and compressed so as to compress the mounting means (36).

10. A heat exchanger (10) according to claim 9 in which the two parts of the outer shell (18, 20) are secured together by welding.

11. A heat exchanger (10) according to any preceding claim in which the heat exchanger comprises a valve (14) which is arranged to vary the flow of exhaust gas through the heat exchanger body (12).

12. A heat exchanger (10) according to claim 11 in which the valve (14) is received within the outer shell (16).

13. A heat exchanger (10) according to claim 11 or 12 in which the valve is mounted in the outer shell (16) by a valve compressible mounting means (36).

14. A heat exchanger (10) according to claim 13 in which the valve compressible mounting means (36) comprises a fibrous material.

15. A heat exchanger (10) according to claim 14 in which the fibrous material is such that when it is compressed it is substantially gas tight to prevent gas leaking between the outer shell (16) and the valve (14).

16. A heat exchanger (10) according to claim 6, 7, 13 or 14 in which the fibrous material comprises a ceramic fibre, a glass fibre, a mineral fibre or a mixture thereof.

17. A heat exchanger (10) according to any of claims 12 to 15 in which the valve compressible mounting means (36) comprises a mat.

18. A heat exchanger (10) according to any of claims 13 to 16 in which the valve compressible mounting means (36) comprises a compressible annular collar.

19. A heat exchanger (10) according to claim 18 in which two compressible annular collars (44,46) are provided, one at each end of the valve.

20. A heat exchanger (10) according to any of claims 12 to 15 in which the valve compressible mounting means comprises a mat and two compressible annular collars (44, 46), the mat being arranged between the annular collars.

21. A method of mounting a heat exchanger (10) in an exhaust assembly, the heat exchanger comprising a heat exchanger body (12), coolant inlet and outlet ducts (28, 30) a compressible mounting means (36) and an outer shell (12) having at least one aperture to allow passage of the coolant ducts, the method being **characterised by** the steps of arranging the compressible mounting means (36) around the heat exchanger body (12), arranging the body (12) in the mounting means (36) in the outer shell (12), arranging the ducts through the or each aperture, compressing the mounting means by means of the outer shell and sealing the or each aperture around the ducts.

22. A method according to claim 21 in which the method comprises the steps of providing an outer shell (12) in two parts (18, 20), arranging the compressible mounting means (36) around the heat exchanger body (12), arranging the body (12) and the mounting means (36) in one part of the outer shell, closing off the outer shell by arranging the other part of the outer shell together with said one part, compressing the parts of the outer shell together to compress the compressible mounting means and securing the parts (18, 20) of the outer shell together.

23. A method according to claim 22 in which the step of securing the parts (28, 30) of the outer shell together comprises the step of securing the parts of the outer shell (16) together by welding.

## Patentansprüche

1. Wärmetauscher (10) in einer Abgasvorrichtung, mit einem Wärmetauscherkörper (12) und Kühlmittelein- und auslaßleitungen (28, 30) **dadurch gekennzeichnet, daß** ein kompressibles Montagemittel um den Körper herum angeordnet ist, und eine äußere Schale (16) um das Montagemittel herum angeordnet ist, wodurch das kompressible Montagemittel zusammengedrückt wird, daß die äußere Schale eine oder mehrere Öffnungen (32, 34) besitzt, um den Kühlmittelleitungen Durchgang zu gewähren und daß Dichtungsmittel vorgesehen sind, um die oder jede Öffnung um die Leitungen herum gegen das Entweichen von Abgas abzudichten.

2. Wärmetauscher nach Anspruch 1, bei dem das Dichtungsmittel das kompressible Montagemittel aufweist, wodurch das kompressible Montagemittel die oder jede Öffnung um die Rohrleitungen herum gegen das Entweichen von Abgasen abdichtet.

3. Wärmetauscher nach Anspruch 2, bei dem die Abdichtung der oder jeder Öffnung durch Zusammendrücken des kompressiblen Montagemittels mit der äußeren Schale bewirkt wird.

4. Wärmetauscher nach Anspruch 1, bei dem das Dichtungsmittel ein Dichtungsteil (44, 46) aufweist.

5. Wärmetauscher nach Anspruch 1, Anspruch 2 oder Anspruch 3, bei dem die Abdichtung der oder jeder Öffnung durch Zusammendrücken des Dichtungsteils mit der äußeren Schale bewirkt wird.

6. Wärmetauscher (10) nach Anspruch 1, bei dem das kompressible Montagemittel (36) ein faseriges Material aufweist.

7. Wärmetauscher (10) nach Anspruch 2, bei dem das faserige Material so beschaffen ist, daß es, wenn es zusammengedrückt wird, im wesentlichen gasdicht ist, um ein Gasentweichen zwischen der äußeren Schale (16) und dem Wärmetauscherkörper (12) zu verhindern.

8. Wärmetauscher (10) nach einem der Ansprüche 1 bis 7, bei dem das kompressible Montagemittel (36) eine um den Wärmetauscherkörper (12) gewickelte Matte aufweist.

9. Wärmetauscher (10) nach einem der vorhergehenden Ansprüche, bei dem die äußere Schale (16) zwei Teile (18, 20) aufweist, wobei die zwei Teile zusammengebracht und zusammengedrückt werden, um das Montagemittel (36) zusammenzudrücken.

10. Wärmetauscher (10) nach Anspruch 9, bei dem die zwei Teile der äußeren Schale (18, 20) durch Schweißen zusammengehalten werden.

11. Wärmetauscher (10) nach einem der vorangegangenen Ansprüche, bei dem der Wärmetauscher ein Ventil (14) aufweist, das so angebracht ist, daß es die Abgasströmung durch den Wärmetauscherkörper (12) variiert.

12. Wärmetauscher (10) nach Anspruch 11, bei dem das Ventil (14) in der äußeren Schale (16) aufgenommen wird.

13. Wärmetauscher (10) nach Anspruch 11 oder Anspruch 12, bei dem das Ventil durch ein kompressibles Ventilmontagemittel (36) in der äußeren Schale (16) angebracht ist.

14. Wärmetauscher (10) nach Anspruch 13, bei dem das kompressible Ventilmontagemittel (36) ein faseriges Material aufweist.

15. Wärmetauscher (10) nach Anspruch 14, bei dem das faserige Material so beschaffen ist, daß es, wenn es zusammengedrückt ist, im wesentlichen gasdicht ist, um einen Gasdurchlaß zwischen der äußeren Schale (16) und dem Ventil (14) zu verhindern.

16. Wärmetauscher (10) nach Anspruch 6, 7, 13 oder 14, bei dem das faserige Material eine Keramikfaser, eine Glasfaser, eine Mineralfaser oder eine Mischung davon aufweist.

17. Wärmetauscher (10) nach einem der Ansprüche 12 bis 15, bei dem das kompressible Ventilmontagemittel (36) eine Matte aufweist.

18. Wärmetauscher (10) nach einem der Ansprüche 13 bis 16, bei dem das kompressible Ventilmontagemittel (36) eine kompressible, ringförmige Manschette aufweist.

19. Wärmetauscher (10) nach Anspruch 18, bei dem zwei kompressible, ringförmige Manschetten (44, 46) vorgesehen sind, eine an jedem Ende des Ventils.

20. Wärmetauscher (10) nach einem der Ansprüche 12 bis 15, bei dem das kompressible Ventilmontagemittel eine Matte und zwei kompressible, ringförmige Manschetten (44, 46) aufweist, wobei die Matte zwischen den ringförmigen Manschetten angeordnet ist.

21. Verfahren zum Befestigen eines Wärmetauschers (10) in einer Abgasvorrichtung, wobei der Wärmetauscher einen Wärmetauscherkörper (12), Kühlmittelein- und auslaßleitungen (28, 30), ein kompressibles Montagemittel (36) und eine äußere Schale (16) mit wenigstens einer Öffnung, um den Kühlmittelleitungen Durchgang zu gewähren, aufweist, wobei das Verfahren **gekennzeichnet ist durch** die Schritte: Anordnen des kompressiblen Montagemittels (36) um den Wärmetauscherkörper (12) herum, Anordnen des Körpers (12) im Montagemittel (36) in der äußeren Schale (16), Anordnen der Leitungen **durch** die oder jede Öffnung, Zusammendrücken des Montagemittels mittels der äußeren Schale und Abdichten der oder jeder Öffnung um die Leitungen herum.

22. Verfahren nach Anspruch 21, bei dem das Verfahren die Schritte aufweist: Vorsehen einer äußeren Schale (16) in zwei Teilen (18, 20), Anordnen des kompressiblen Montagemittels (36) um den Wärmetauscherkörper (12), Anordnen des Körpers (12) und des Montagemittels (36) in einem Teil der äußeren Schale, Schließen der äußeren Schale durch Anordnen des anderen Teils der äußeren Schale zusammen mit dem einen Teil, Zusammendrücken der Teile der äußeren Schale, um das kompressible Montagemittel zusammenzudrücken und Befestigen der Teile (18,20) der äußeren Schale aneinander.

23. Verfahren nach Anspruch 22, bei welchem der Schritt des Befestigens der Teile (18, 20) der äußeren Schale aneinander den Schritt des Befestigens der Teile der äußeren Schale (16) aneinander durch Schweißen aufweist.

## Revendications

1. Echangeur de chaleur (10) dans un ensemble d'échappement comprenant un corps d'échangeur de chaleur (12) et des conduits d'entrée et de sortie de liquide de refroidissement (28, 30), **caractérisé en ce qu'**un moyen de montage compressible est agencé autour du corps et une coquille extérieure (16) est agencée autour du moyen de montage de telle sorte que le moyen de montage compressible soit comprimé, **en ce que** la coquille extérieure possède une ou plusieurs ouvertures (32, 34) pour permettre le passage des conduits de liquide de refroidissement et **en ce qu'**un moyen d'étanchéité est prévu pour étanchéifier l'ouverture ou chaque ouverture autour des conduits contre la fuite des gaz d'échappement.

2. Echangeur de chaleur selon la revendication 1, dans lequel le moyen d'étanchéité comprend le moyen de montage compressible, moyennant quoi le moyen de montage compressible étanchéifie l'ouverture ou chaque ouverture autour des conduits contre la fuite des gaz d'échappement.

3. Echangeur de chaleur selon la revendication 2, dans lequel l'étanchéité de l'ouverture ou de chaque ouverture est assurée en comprimant le moyen de montage compressible avec la coquille extérieure.

4. Echangeur de chaleur selon la revendication 1, dans lequel le moyen d'étanchéité comprend un élément de joint (44, 46).

5. Echangeur de chaleur selon la revendication 1, 2 ou 3, dans lequel l'étanchéité de l'ouverture ou de chaque ouverture est assurée en comprimant l'élément de joint avec la coquille extérieure.

6. Echangeur de chaleur (10) selon la revendication 1, dans lequel le moyen de montage compressible (36) comprend une matière fibreuse.

7. Echangeur de chaleur (10) selon la revendication 2, dans lequel la matière fibreuse est telle que, lorsqu'elle est comprimée, elle est sensiblement étanche aux gaz de manière à empêcher les fuites de gaz entre la coquille extérieure (16) et le corps d'échangeur de chaleur (12).

8. Echangeur de chaleur (10) selon l'une quelconque des revendications 1 à 7, dans lequel le moyen de montage compressible (36) comprend un mat enveloppé autour du corps d'échangeur de chaleur (12).

9. Echangeur de chaleur (10) selon l'une quelconque des revendications précédentes, dans lequel la coquille extérieure (16) comprend deux parties (18, 20), les deux parties étant amenées l'une vers l'autre et comprimées de manière à comprimer le moyen de montage (36).

10. Echangeur de chaleur (10) selon la revendication 9, dans lequel les deux parties de la coquille extérieure (18, 20) sont fixées l'une à l'autre par soudage.

11. Echangeur de chaleur (10) selon l'une quelconque des revendications précédentes, dans lequel l'échangeur de chaleur comprend une vanne (14) qui est agencée pour faire varier le flux de gaz d'échappement à travers le corps d'échangeur de chaleur (12).

12. Echangeur de chaleur (10) selon la revendication 11, dans lequel la vanne (14) est reçue à l'intérieur de la coquille extérieure (16).

13. Echangeur de chaleur (10) selon la revendication 11 ou 12, dans lequel la vanne est montée dans la coquille extérieure (16) par un moyen de montage compressible (36) de vanne.

14. Echangeur de chaleur (10) selon la revendication 13, dans lequel le moyen de montage compressible (36) de vanne comprend une matière fibreuse.

15. Echangeur de chaleur (10) selon la revendication 14, dans lequel la matière fibreuse est telle que, lorsqu'elle est comprimée, elle est sensiblement étanche aux gaz de manière à empêcher les fuites de gaz entre la coquille extérieure (16) et la vanne (14).

16. Echangeur de chaleur (10) selon la revendication 6, 7, 13 ou 14, dans lequel la matière fibreuse comprend une fibre céramique, une fibre de verre, une fibre minérale ou un mélange de celles-ci.

17. Echangeur de chaleur (10) selon l'une quelconque des revendications 12 à 15, dans lequel le moyen de montage compressible (36) de vanne comprend un mat.

18. Echangeur de chaleur (10) selon l'une quelconque des revendications 13 à 16, dans lequel le moyen de montage compressible (36) de vanne comprend un collier annulaire compressible.

19. Echangeur de chaleur (10) selon la revendication 18, dans lequel deux colliers annulaires compressibles (44, 46) sont prévus, un à chaque extrémité de la vanne.

20. Echangeur de chaleur (10) selon l'une quelconque des revendications 12 à 15, dans lequel le moyen de montage compressible de vanne comprend un mat et deux colliers annulaires compressibles (44, 46), le mat étant agencé entre les colliers annulaires.

21. Procédé de montage d'un échangeur de chaleur (10) dans un ensemble d'échappement, l'échangeur de chaleur comprenant un corps d'échangeur de chaleur (12), des conduits d'entrée et de sortie de liquide de refroidissement (28, 30), un moyen de montage compressible (36) et une coquille extérieure (16) possédant au moins une ouverture pour permettre le passage des conduits de liquide de refroidissement, le procédé étant **caractérisé par** les étapes consistant à agencer le moyen de montage compressible (36) autour du corps d'échangeur de chaleur (12), agencer le corps (12) dans le moyen de montage (36) dans la coquille extérieure (16), agencer les conduits à travers l'ouverture ou chaque ouverture, comprimer le moyen de montage au moyen de la coquille extérieure et étanchéifier l'ouverture ou chaque ouverture autour des conduits.

22. Procédé selon la revendication 21, dans lequel le procédé comprend les étapes consistant à fournir une coquille extérieure (16) en deux parties (18, 20), agencer le moyen de montage compressible (36) autour du corps d'échangeur de chaleur (12), agencer le corps (12) et le moyen de montage (36) dans une première partie de la coquille extérieure, fermer la coquille extérieure en agençant l'autre partie de la coquille extérieure avec ladite première partie, comprimer les parties de la coquille extérieure l'une avec l'autre pour comprimer le moyen de montage compressible et fixer les parties (18, 20) de la coquille extérieure l'une à l'autre.

23. Procédé selon la revendication 22, dans lequel l'étape de fixation des parties (28, 30) de la coquille extérieure comprend l'étape consistant à fixer les parties de la coquille extérieure (16) l'une à l'autre par soudage.
